# EUROPÄISCHE PATENTSCHRIFT

(11) **EP 2 263 028 B1**
(45) Veröffentlichungstag und Bekanntmachung des Hinweises auf die Patenterteilung: **25.01.2012**
(21) Anmeldenummer: 09724581.5
(22) Anmeldetag: 20.03.2009
(51) Int. Cl.: F16H 63/30, F16H 59/70

(54) **ANORDNUNG ZUR LAGERUNG EINER SCHALTSCHIENE MIT SENSOR ZUR POSITIONSBESEITIGUNG**
ARRANGEMENT FOR MOUNTING A SHIFT RAIL, WITH A SENSOR FOR POSITION DETERMINATION
AGENCEMENT DE SUPPORT D'UNE TIGE DE COMMANDE AVEC CAPTEUR DE DÉTERMINATION DE LA POSITION

(30) Priorität: 26.03.2008 DE 102008015613
(43) Veröffentlichungstag der Anmeldung: 22.12.2010
(73) Patentinhaber: Schaeffler Technologies GmbH & Co. KG, 91074 Herzogenaurach (DE)
(72) Erfinder: OBERPERTINGER, Gerhard, 91325 Adelsdorf (DE)
(86) Internationale Anmeldenummer: PCT/EP2009/002063
(87) Internationale Veröffentlichungsnummer: WO 2009/118131

(56) Entgegenhaltungen:
- DE-A1- 4 208 888
- DE-A1- 4 314 952
- FR-A- 2 581 002

## Beschreibung

### Gebiet der Erfindung

Die Erfindung betrifft eine Anordnung zur Lagerung einer Schaltschiene, mit einem Gehäuse, mit einer Schaltschiene und mit einem von dem Gehäuse aufgenommenen Lager zur längsverschieblichen Lagerung der Schaltschiene in dem Gehäuse.

### Hintergrund der Erfindung

Eine derartige Anordnung ist beispielsweise aus der DE 10 2004 053 205 A1 bekannt.

Eine Schaltschiene ist insbesondere in einem Schaltgetriebe eines Kraftfahrzeugs vorgesehen. Bei einem Schaltgetriebe kann die Schaltschiene entlang ihrer Längsachse zwischen mindestens zwei axial benachbarten Positionen verschoben werden. Bei zwei Positionen entspricht beispielsweise eine erste Position einer Neutralposition und eine zweite Position einem eingelegten Gang. Gleichzeitig mit der Schaltschiene wird in der Regel ein daran befestigtes Schaltelement zwischen diesen Positionen verschoben. Bei dem Schaltelement handelt es sich insbesondere um eine Schaltgabel oder einen Schaltfinger. Dabei erfolgt über das Schaltelement und über weitere Zwischenelemente, wie beispielsweise eine Schaltmuffe, eine Schaltung des zur Bildung einer Übersetzungsstufe erforderlichen Zahnradsatzes.

Um die Schaltung weiterer Gänge zu ermöglichen, ist es bekannt, eine Anzahl von Schaltschienen vorzusehen, die parallel zueinander angeordnet sind.

Um das gleichzeitige Einlegen von zwei Gängen zu verhindern, ist es bei einem Schaltgetriebe mit mehreren Schaltschienen erforderlich, dass sich bei einem Wechsel von einem Gang in einen anderen alle Schaltschienen in ihrer Neutralposition befinden, d.h. dass kein Gang eingelegt ist. Darum ist es beispielsweise bei automatischen oder halbautomatischen Schaltgetrieben wichtig, die Position der Schaltschiene und des Schaltelements, z.B. der Schaltgabel oder des Schaltfingers zu kennen.

Die gattungsgemäße DE 43 14 952 A1 betrifft eine Vorrichtung zur Erfassung der Gangstellung eines Schaltgetriebes. Die DE 43 14 952 A1 schlägt hierzu insbesondere ein Sensormodul vor, welches zur Erfassung der Gassen und Gänge eine Dreh- und eine längsverschiebliche Bewegung der Schaltwelle erfasst. Dazu ist insbesondere vorgesehen, dass eine in einem Getriebegehäuse dreh- und längsverschieblich gelagerte Schaltwelle mit einem Ende das Getriebegehäuse nach außen durchdringt und in das Sensormodul hineinreicht, welches außerhalb des Getriebegehäuses angebracht ist und in welchem eine Anzahl von digitalen und analogen Schaltelementen angeordnet ist. Dadurch ergibt sich nachteiligerweise ein hoher Bauraumbedarf der Vorrichtung, insbesondere in axialer Richtung. Zudem ist die Notwendigkeit mehrerer Schaltelemente mit entsprechenden Kosten verbunden.

Die DE 10 2004 053 205 A1 schlägt eine druckmittelbetätigte Schaltvorrichtung vor, bei der zur Positionsbestimmung der Schaltschiene bzw. einer Schaltstange Positionssensoren vorgesehen sind. In der DE 10 2004 053 205 A1 ist die Schaltstange zumindest teilweise hohl ausgeführt und es ist insbesondere auch ein zylindrischer Hydraulikeinsatz vorgesehen, welcher in die hohl ausgeführte Schaltstange eingreift und auf dem die Schaltstange bei einem Schaltvorgang verschoben wird. Die Positionssensoren sind hierbei zwischen dem zylindrischen Hydraulikeinsatz und der darauf befindlichen Schaltstange angebracht. Nachteiligerweise ist die in der DE 10- 2004 053 205 A1 vorgeschlagene Positionsbestimmung der Schaltstange im Wesentlichen nur für druckmittelbetätigte Schaltvorrichtungen geeignet, da die Lösung einer hohlen Schaltstange und eines Hydraulikeinsatzes bedarf.

### Aufgabe der Erfindung

Ausgehend vom Stand der Technik liegt der Erfindung die Aufgabe zugrunde, eine Anordnung zur Lagerung einer Schaltschiene anzugeben, welche unter der Maßgabe einer möglichst einfachen Realisierbarkeit eine Bestimmung der Position der Schaltschiene erlaubt.

### Lösung der Aufgabe

Die genannte Aufgabe wird erfindungsgemäß gelöst durch eine Anordnung zur Lagerung einer Schaltschiene, mit einem Gehäuse, mit einer Schaltschiene und mit einem von dem Gehäuse aufgenommenen Lager zur längsverschieblichen Lagerung der Schaltschiene in dem Gehäuse, wobei in dem Gehäuse zur Bestimmung der Position der Schaltschiene ein Sensor der Stirnfläche eines axialen Endes der Schaltschiene gegenüberliegend angeordnet ist.

Bei einer Schaltschiene ist, beispielsweise im Rahmen eines Schaltvorgangs, im Allgemeinen nur eine längsverschiebliche Bewegung vorgesehen. Die Erfindung ist aber ebenso auf solche Schaltschienen anwendbar, die drehbar gelagert sind. Die Erfindung geht von der Überlegung aus, dass sich die axiale Position der Schaltschiene, insbesondere im Sinne einer Schaltposition und einer Neutralposition, eindeutig und überraschend einfach anhand einer Verschiebung oder einer Position der Stirnfläche feststellen lässt.

Durch die erfindungsgemäße Anordnung des Sensors "fokussiert" der Sensor auf die Stirnfläche der Schaltschiene, so dass bei einer Bewegung der Schaltschiene sich diese mit ihrer Stirnfläche auf den Sensor zu bewegt, bzw. sich von diesem entfernt.

Aus einem Sensorsignal des Sensors wird eine Position der Schaltschiene, insbesondere im Sinne einer Neutralposition oder einer Schaltposition, abgeleitet. Dazu wird beispielsweise mittels des Sensors ein Abstand des Sensors zu der Schaltschiene ermittelt, woraus auf eine Position der Schaltschiene geschlossen wird. Für eine derartige Abstandsmessung kommen eine Reihe von sogenannten Abstandssensoren in Frage, welche in der Regel eine Laufzeit eines aktiv ausgesandten, an der Stirnfläche der Schaltschiene reflektierten Signals detektieren. Bei dem von dem Abstandssensor aktiv ausgesandten Signal handelt es sich beispielsweise um ein Licht- oder Ultraschallsignal. Es sind auch kapazitive Abstandssensoren bekannt.

Wie schon beschrieben wurde, bewegt die Schaltschiene sich bei einem Schaltvorgang zwischen beispielsweise zwei definierten Positionen, wobei die entsprechenden Positionen einer Neutralposition bzw. einer Schaltposition der Schaltschiene entsprechen. Für die Bestimmung der Position der Schaltschiene ist es daher im Prinzip nicht notwendig, eine "absolute" Position der Schaltschiene zu bestimmen. Im Wesentlichen ist es ausreichend festzustellen, ob die Schaltschiene sich beispielsweise ausgehend von einem Ausgangs-oder Bezugspunkt auf den Sensor zu- oder wegbewegt. Dazu kann beispielsweise ein Näherungssensor verwendet werden. Unter einem derartigen Näherungssensor versteht man insbesondere einen Sensor, der ein Feld aufbaut, welches durch einen "Störkörper" beeinflusst wird. Der "Störkörper" ist in dem Fall die Schaltschiene. In Abhängigkeit von der Beeinflussung wird ein Sensorsignal, beispielsweise eine Spannung, erzeugt. Das entsprechende Sensorsignal kann dann daraufhin ausgewertet werden, ob sich die Schaltschiene auf den Sensor zu- oder gegebenenfalls wegbewegt. Zweckmäßigerweise wird dabei die Neutralposition, insbesondere das mit der Neutralposition korrelierte Sensorsignal, als Bezug gewählt, so dass aus dem abgegriffenen Sensorsignal ableitbar ist, ob sich die Schaltstange in der Neutralposition befindet, oder sich beispielsweise aus dieser wegbewegt. Ein derartiges Wegbewegen ist dann insbesondere mit dem Einlegen eines Ganges korreliert, so dass dieses als "Schaltschiene ist in Schaltposition" auswertbar ist.

Selbstverständlich können sowohl mit Abstands- als auch mit Näherungssensoren auch mehrere Positionen der Schaltschiene ermittelt werden.

Insgesamt ermöglicht es die Erfindung, mittels eines einzigen Sensors die Position der Schaltschiene, insbesondere im Sinne einer Schaltposition und einer Neutralposition, zu bestimmen. Eine exakte Einbaulage des Sensors, beispielsweise bezüglich einer axialen Positionierung der Schaltschiene in dem Gehäuse ist nicht erforderlich, was den Montageprozeß erheblich vereinfacht. Insgesamt ist eine Positionsbestimmung der Schaltschiene mittels der erfindungsgemäßen Anordnung auf besonders einfache und kostengünstige Weise realisierbar.

Der Sensor ist insbesondere vollständig innerhalb des Gehäuses angeordnet. Das Gehäuse ist dabei beispielsweise als ein Getriebegehäuse eines Schaltgetriebes eines Kraftfahrzeugs gegeben, oder ist innerhalb eines derartigen Getriebegehäuses angeordnet. Die Schaltschiene ist beispielsweise innerhalb des Gehäuses, insbesondere komplett innerhalb des Getriebegehäuses, angeordnet, durchdringt dieses also nicht. Dadurch wird insgesamt eine in axialer Richtung besonders kurzbauende Anordnung realisiert.

Die Schaltschiene ist beispielweise als eine kostengünstige Blechschiene ausgeführt. Alternativ kann die Schaltschiene auch als eine Schaltstange mit einem runden Querschnitt gegeben sein. In einem Getriebegehäuse eines Schaltgetriebes sind häufig mehrere Schaltschienen vorgesehen, welche parallel zueinander angeordnet sind. Weiterhin sind in einem derartigen Getriebegehäuse in der Regel eine Anzahl weiterer Elemente angeordnet, beispielsweise die zur Bildung der Übersetzungsstufen erforderlichen Zahnradsätze, Synchronkupplungen etc.

Wie schon beschrieben wurde, kann der Sensor als ein Näherungssensor ausgeführt sein. Ein derartiger Näherungssensor ist beispielsweise als ein kapazitiver Näherungssensor gegeben. Allgemein kann man sagen, dass ein kapazitiver Näherungssensor berührungsfrei auf Annäherung eines leitenden und auch nicht leitenden "Störkörpers" reagiert. Somit ist es mittels eines kapazitiven Näherungssensor möglich, festzustellen, ob sich die Schaltschiene beispielsweise auf den Sensor zu und in eine Schaltposition bewegt. Die Schaltschiene kann dabei sowohl aus einem Nicht-Metall, beispielsweise einem entsprechenden Kunststoff, als auch aus einem Metall gefertigt sein. Die Wirkungsweise eines kapazitiven Näherungssensors kann auf dem Prinzip eines Streufeldkondensators beruhen. Zur Auswertung eines kapazitiven Nährungssensors ist es bekannt, ein elektrisches Feld mittels eines Oszillators aufzubauen und den Einfluß der "Störkörpers" durch ein Phasen- oder Amplitudensignal zu erfassen. Auch kann dieser Einfluß durch eine Verstimmung eines Schwingkreises ermittelt werden.

Als ein weiterer Näherungssensor ist in dem Zusammenhang ein induktiver Näherungssensor zu nennen. Dabei wird der Effekt ausgenutzt, dass ein sich durch den "Störkörper' änderndes Magnetfeld zur Erzeugung von Strömen führt.

Mittels eines induktiven Näherungssensors ist es möglich, berührungslos ein metallisches Objekt, in dem Fall also die Schaltschiene, zu erfassen. Da die Schaltschiene häufig ohnehin als eine Blechschiene ausgeführt ist, ist es problemlos möglich, einen derartigen induktiven Näherungssensor zu verwenden.

Die Schaltschiene kann einheitlich aus nur einem Material, beispielsweise Blech, gefertigt sein. Es kann aber auch vorteilhaft vorgesehen sein, einen Bereich der Schaltschiene, beispielsweise das axiale Ende, aus einem anderen Material zu fertigen, insbesondere um eine entsprechende Wirkverbindung zu dem Sensor zu ermöglichen.

In einer anderen vorteilhaften Ausgestaltung umfasst die Schaltschiene einen mit dem Sensor in Wirkverbindung stehenden Positionsgeber. Der Positionsgeber ist dabei z.B. mittels einer Klebung an der Schaltschiene befestigt. Der Positionsgeber ist beispielsweise als ein Metallkörper gegeben, welcher in Wirkverbindung mit dem als induktiver oder kapazitiver Näherungssensor ausgeführten Sensor steht. Der Positionsgeber kann auch als eine Kondensatorelektrode ausgeführt sein. Der Sensor ist dann als ein kapazitiver Abstandssensor ausgeführt. Ein kapazitiver Abstandssensor arbeitet, vereinfacht gesagt, nach dem Prinzip eines Plattenkondensators. Dazu sind zwei voneinander über ein Dielektrikum, z.B. Luft, isolierte Kondensatorelektroden notwendig, deren Distanz anhand der zwischen ihnen bestehenden Kapazität bestimmbar ist.

Mittels des Positionsgebers ist es vorteilhaft möglich, die Schaltschiene weitestgehend aus einem beliebigen und kostengünstigen Material zu fertigen, und für die Herstellung einer Wirkverbindung mit dem Sensor nur den Positionsgeber aus einem entsprechenden, gegebenenfalls teureren Material zu fertigen.

Der Sensor ist der Stirnfläche des axialen Endes der Schaltschiene gegenüberliegend angeordnet. Für eine Wirkverbindung zwischen dem Positionsgeber und dem Sensor ist es daher zweckmäßig und ausreichend, den Positionsgeber, beispielsweise in Form eines Metallplättchens, nur an der Stirnfläche der Schaltschiene anzuordnen. Dies ermöglicht insgesamt eine besonders kostengünstige Herstellung.

In einer zweckmäßigen Ausführungsform ist der Positionsgeber aus einem magnetischen Material gefertigt. Der Positionsgeber ist dabei vorzugsweise als ein kostengünstiger Permanentmagnet gegeben. In dieser Ausgestaltungsvariante wird die Verwendung eines Hallsensors oder eines Reedschalters als Sensor ermöglicht. Bei einem Reedschalter handelt es sich im Prinzip um ein einfaches Relais zum Schalten eines Stromkreises, welches im Wesentlichen zwei Kontaktzungen umfasst, welche aus einem ferromagnetischen Material gefertigt sind. Die Kontaktzungen ziehen sich bei Annäherung eines Magnetfeldes an und schließen die Schaltung. Sobald das Magnetfeld abfällt oder eine bestimmte Kraft unterschreitet öffnet sich der Kontakt zwischen den Kontaktzungen wieder.

In einer bevorzugten Ausgestaltungsvariante ist der Sensor ein Hallsensor. Der Hallsensor ist ein sogenannter Magnetfeldsensor und basiert auf dem Prinzip des Hall-Effekts. Ein stromdurchflossener Hallsensor, welcher in ein Magnetfeld gebracht wird, liefert eine Ausgangsspannung, eine sogenannte Hallspannung. Die Hallspannung ist proportional zur Magnetfeldstärke. Dieser Effekt wird in dieser Ausgestaltungsvariante zur Bestimmung der Position der Schaltschiene ausgenutzt: Wird der magnetische Positionsgeber auf den Hallsensor zu oder von diesem weg bewegt, dann ändert sich in Abhängigkeit von dem Abstand des Hallsensors zu dem magnetischen Positionsgeber, die auf den Hallsensor wirkende Magnetfeldstärke und demnach auch die abgreifbare Hallspannung. Zweckmäßigerweise wird hier die mit der Neutralposition korrelierte Hallspannung als Bezug gewählt. Bewegt sich die Schaltschiene in Bezug auf die Neutralposition auf den Hallsensor zu, steigt die Hallspannung an. Bewegt sich die Schaltschiene in Bezug auf die Neutralposition hingegen von dem Hallsensor weg, dann sinkt die Hallspannung. Die Hallspannung kann also auf einfache Weise auf verschiedene mögliche Positionen der Schaltschiene kalibriert werden. Ein Hallsensor wird zudem im Kraftfahrzeugbereich als ein bewährter und robuster Sensor häufig eingesetzt, so dass auf eine ausgereifte und kostengünstige Technologie zurückgegriffen werden kann.

Vorzugsweise ist das Lager in einer Lagerhülse angeordnet und lagert das axiale Ende der Schaltschiene. Die Lagerhülse ist dabei beispielsweise ein Teil des Gehäuses oder ist als ein separates Teil in dem Gehäuse angebracht. Dabei kann es vorgesehen sein, dass die Lagerhülse aus dem Getriebegehäuse eines Schaltgetriebes herausgeformt ist oder alternativ innerhalb des Getriebegehäuses in einen entsprechenden Aufnahmebereich eingesetzt ist. Die Lagerhülse erlaubt eine einfache Anbringung des Lagers in dem Gehäuse. Durch die Lagerung des axialen Endes wird auf einfache Weise eine stabile Linearführung der Schaltschiene ermöglicht.

Vorteilhafterweise ist der Sensor einem Boden der Lagerhülse zugeordnet. Diese Ausgestaltungsvariante ist besonders günstig in Hinblick auf die Bildung einer abgestimmten Montageeinheit aus Lagerhülse, Lager, Schaltschiene und Sensor.

In einer weiter vorteilhaften Ausführungsform ist das Lager in der Lagerhülse als ein Wälzlager gegeben. Mittels des Wälzlagers wird eine besonders reibungs- und damit verschleißarme Längsverschiebung der Schaltschiene ermöglicht.

Zweckmäßigerweise ist das Wälzlager als ein Radial-Linear-Wälzlager gegeben. In dem Radial-Linear-Wälzlager ist die Schaltschiene sowohl längsverschieblich, als auch drehbar gelagert. Bei einer Schaltschiene ist im Allgemeinen nur eine Linearverschiebung vorgesehen. Um beispielsweise nötige Montagetoleranzen einzuhalten, ist es jedoch sinnvoll, eine Drehung, beispielsweise im Sinne einer Torsion oder Verkippung der Schaltschiene zu zulassen.

Vorzugsweise ist die Lagerhülse aus einem abriebfesten Material gefertigt. Die Lagerhülse ist zum einen dafür vorgesehen, das Wälzlager aufzunehmen. Zum anderen bildet die Lagerhülse insbesondere auch die Lauffläche für die Wälzkörper des Wälzlagers. Deshalb ist es sinnvoll, die Lagerhülse aus einem abriebfesten Material zu fertigen, um einen vorzeitigen Verschleiß der Lagerhülse zu vermeiden.

Vorteilhafterweise ist die Lagerhülse aus einem Stahl gefertigt. Stahl, insbesondere gehärteter Stahl, ist ein vergleichsweise kostengünstiges und gleichzeitig sehr abriebfestes Material, mit welchen die gewünschten Eigenschaften der Lagerhülse realisiert werden können.

### Kurze Beschreibung der Zeichnung

Ausführungsbeispiele der Erfindung werden anhand einer Zeichnung näher erläutert. Dabei zeigen:
- Fig.1: in einem Querschnitt eine Anordnung zur Lagerung einer Schaltschiene gemäß einer ersten Ausführungsform und
- Fig.2: in einem Querschnitt eine Anordnung zur Lagerung einer Schaltschiene gemäß einer zweiten Ausführungsform.

### Ausführliche Beschreibung der Zeichnung

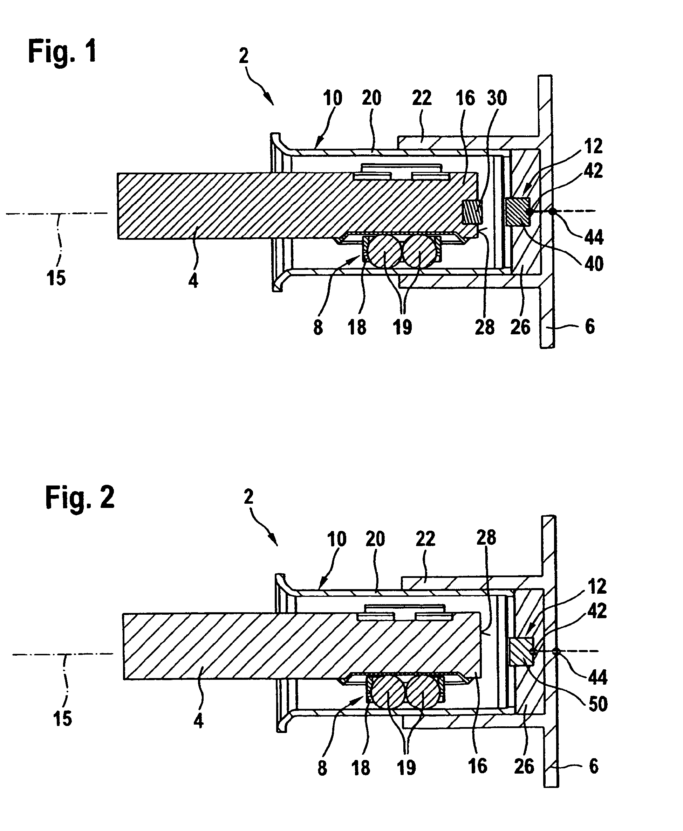

Fig. 1 zeigt eine Darstellung einer Anordnung 2 zur Lagerung einer Schaltschiene 4 gemäß einer ersten Ausführungsform. Die Anordnung 2 ist hier im Rahmen eines Schaltgetriebes eines Kraftfahrzeugs vorgesehen. Die Anordnung 2 umfasst eine Schaltschiene 4 und ein Gehäuse 6, welches in der Darstellung nur ausschnittsweise zu sehen ist. Weiter umfasst die Anordnung 2 ein Lager 8, welches in einer Lagerhülse 10 aufgenommen ist, sowie einen Sensor 12.

Das Gehäuse 6 ist hier als ein Getriebegehäuse des Schaltgetriebes gegeben. In dem Gehäuse 6 sind in nicht sichtbarer Weise weitere Schaltschienen 4 vorgesehen, welche parallel zueinander angeordnet sind. Zudem befinden sich in dem Gehäuse 6 weitere Getriebeelemente, wie beispielsweise die zur Bildung der Übersetzungsstufen erforderlichen Zahnradsätze, Synchronkupplungen, etc.

Die Schaltschiene 4 ist mit einem axialen Ende 16 in dem Lager 8 gelagert, wobei das Lager 8 hier als ein Radial-Linear-Wälzlager 18 ausgeführt ist. Das in Fig. 1 nicht sichtbare zweite axiale Ende der Schaltschiene 4 ist ebenfalls in einem entsprechenden Radial-Linear-Wälzlager 18 gelagert. In dem Radial-Linear-Wälzlager 18 ist die Schaltschiene 4 sowohl längsverschieblich, als auch drehbar gelagert. Bei der Schaltschiene 4 ist im Betrieb des Schaltgetriebes nur eine Linearverschiebung vorgesehen. Das Radial-Linear-Wälzlager 18 erlaubt jedoch neben einer Linearverschiebung zusätzlich eine Drehung, beispielsweise im Sinne einer Torsion oder Verkippung der Schaltschiene 4. Dadurch ist es möglich, nötige Montagetoleranzen einzuhalten.

Das Radial-Linear-Wälzlager 18 ist in der Lagerhülse 10 aufgenommen, wobei die Wälzkörper 19 des Radial-Linear-Wälzlagers 18 auf der inneren Mantelfläche der Lagerhülse 10 laufen. Aus der Querschnittsdarstellung wird die beidseits der Längsachse 15 symmetrische Anordnung der Wälzkörper 19 nicht ersichtlich. Um eine verschleißfeste Lauffläche für die Wälzkörper zu realisieren, ist der Mantel 20 der Lagerhülse 10 aus einem hochfesten Stahl gefertigt. Die Lagerhülse 10 selbst ist in einen zylindrischen Gehäuseabschnitt 22 des Gehäuses 6 eingesetzt.

Der Sensor 12 ist in einen Boden 26 der Lagerhülse 10 eingebracht, derart dass er der Stirnfläche 28 des axialen Endes 16 der Schaltstange 4 gegenüberliegend angeordnet ist. An der Stirnfläche 28 der Schaltstange 4 ist ein mit dem Sensor 12 in Wirkverbindung stehender Positionsgeber 30 angebracht. Der Sensor 12 und der Positionsgeber 30 sind beide im Wesentlichen entlang der Längsachse 15 der Schaltschiene 4 angeordnet. Das vereinfacht den Montageprozeß erheblich, da eine exakte Einbaulage des Sensors 4, beispielsweise bezüglich einer axialen Positionierung der Schaltschiene 4 in dem Gehäuse 6, nicht erforderlich ist. Bei einem Montageprozeß wird einfach der Boden 26 der Lagerhülse 10 mit dem darin befindlichen Sensor 12 in den zylindrischen Gehäuseabschnitt 22 eingefügt. Auf den Boden 26 wird der Mantel 20 der Lagerhülse 10 aufgepresst, in welchen dann das Radial-Linear-Wälzlager 18 und die Schaltschiene 4 mit dem daran befestigten Positionsgeber 30 eingeführt wird.

Bei einem Schaltvorgang wird die Schaltschiene 4 entlang ihrer Längsachse 15 zwischen drei axial benachbarten Positionen verschoben. Dabei entspricht die mittlere Position der Neutralposition und die beiden anderen Positionen sind Schaltpositionen und sind jeweils einem Gang zugeordnet. Gleichzeitig mit der Schaltschiene 4 wird ein daran befestigter, in der Darstellung nicht sichtbarer Schaltfinger zwischen diesen Positionen verschoben. Zum Schalten eines Ganges wird die Schaltschiene 4 in dem Schaltgetriebe aus der Neutralposition heraus in die Schaltposition bewegt. Dabei erfolgt über den Schaltfinger und über eine daran befestigte Schaltmuffe die Schaltung des zur Bildung der entsprechenden Übersetzungsstufe erforderlichen Zahnradsatzes.

Mittels des Sensors 12 ist eine Bestimmung der axialen Position der Schaltstange 4, insbesondere im Sinne einer Neutral- oder Schaltposition, möglich. Dazu ist der Sensor 12 hier als ein Hallsensor 40 ausgeführt und der Positionsgeber 30 ist als ein Permanentmagnet gegeben.

Der in dem Magnetfeld des Positionsgebers 30 befindliche Hallsensor 40 liefert eine Hallspannung, welche von dem Signalnehmer 42 abgegriffen wird und über einen Signalausgang 44 zu einer hier nicht ersichtlichen Auswerteeinheit des Schaltgetriebes des Kraftfahrzeugs geleitet wird.

Die von dem Hallsensor 40 erzeugte Hallspannung ist proportional zu der auf ihn wirkenden Magnetfeldstärke des Positionsgebers 30. Die auf den Hallsensor 40 wirkende Magnetfeldstärke ist demnach auch abhängig von dem Abstand des Positionsgebers 30 zu dem Hallsensor 40. D.h. beispielsweise, dass bei einer Heranführung des Hallsensors 40 an den Positionsgeber 30 durch eine entsprechende Bewegung der Schaltschiene 4 die abgreifbare Hallspannung steigt. Dieser Effekt wird für eine Bestimmung der axialen Position der Schaltschiene 4 genutzt.

Dazu wird die mit der Neutralposition der Schaltschiene 4 korrelierte Hallspannung als Bezug gewählt, die Hallspannung wird sozusagen bezüglich der Neutralposition kalibriert. Wenn sich die Schaltschiene 4 im Rahmen eines Schaltvorgangs aus ihrer Neutralposition heraus in eine Schaltposition bewegt, dann bewegt sich die Schaltschiene 4 mit dem an ihrer Stirnfläche 28 befindlichen Positionsgeber 30 auf den Hallsensor 40 zu, bzw. von diesem weg. Bei einer Bewegung der Schaltstange 4 auf den Hallsensor 40 zu steigt die von dem Signalnehmer 42 abgegriffene Hallspannung im Vergleich zur der "abgenullten" Hallspannung und bei einer Wegbewegung sinkt die von dem Signalnehmer 42 abgegriffene Hallspannung dementsprechend.

Das entsprechende Spannungssignal wird von dem Signalnehmer 42 abgegriffen und wird über den Signalausgang 44 an die Auswerteeinheit übermittelt. Aus einer Abweichung der Hallspannung von der kalibrierten Hallspannung schließt die Auswerteeinheit auf eine Schaltposition als Schaltschienenposition. Insgesamt ist es mittels nur eines einzigen, kostengünstigen Hallsensors 40 und des als Permanentmagnet gegebenen Positionsgebers 30 möglich, die Position der Schaltschiene 4, insbesondere im Sinne einer Schalt- oder Neutralposition, zu ermitteln.

In FIG 2 ist die Anordnung 2 in einer zweiten Ausgestaltungsvariante gezeigt. Im Unterschied zu der in FIG 1 beschriebenen Anordnung 2, ist der Sensor 12 als ein kapazitiver Näherungssensor 50 ausgeführt. Die Schaltschiene 4 ist in dieser Ausgestaltungsvariante aus einem Blech gefertigt. Grundsätzlich kann die Schaltschiene 4 aber aus einem beliebigen Werkstoff, wie z.B. einem Kunststoff gefertigt sein. Im Gegensatz zu der Darstellung in FIG 1 ist kein Positionsgeber 30 an der Schaltschiene 4 vorgesehen.

Die in FIG 2 gezeigte Schaltschiene 4 ist im Rahmen eines Schaltvorgangs entlang ihrer Längsachse 15 zwischen zwei axial benachbarten Positionen verschiebbar. In dem Fall entspricht die dem Sensor 12 abgewandte Position der Schaltschiene 4 der Neutralposition und die andere Position entspricht der einem Gang zugeordneten Schaltposition.

Der nach dem Prinzip eines Streufeldkondensators arbeitende kapazitive Näherungssensor 50 ist hier derart eingerichtet, dass er kein Signal erzeugt, wenn sich die Schaltschiene 4 in ihrer Neutralposition befindet. Bewegt sich die Schaltschiene 4 beim Einlegen eines Gangs aus ihrer Neutralposition in die Schaltposition, detektiert der Näherungssensor 50, infolge einer Änderung seiner Kapazität, eine Annäherung der Schaltschiene 4. Das entsprechende "Änderungssignal" wird von dem Signalnehmer 42 abgegriffen und über den Signalausgang 44 an die Auswerteeinheit weitergeleitet. Bei einer detektierten Annäherung der Schaltschiene 4 schließt die Auswerteeinheit auf das Erreichen einer Schaltposition als Schaltschienenposition. Bei einer erneuten Änderung bzw. einem erneuten Vorliegen eines "Änderungssignals" wird dann auf das Erreichen der Neutralposition geschlossen. Zusätzlich wird die Signalgröße ausgewertet, um ein Annähern von einem Entfernen zu unterscheiden.

Mittels des kapazitiven Nährungssensors 50 ist es möglich, unabhängig von einem Positionsgeber 40 die Position der Schaltschiene 4, insbesondere im Sinne einer Schalt- oder Neutralposition, zu ermitteln, selbst wenn die Schaltschiene 4 aus einem Nicht-Metall gefertigt ist.

**Liste der Bezugszahlen**
- 2: Anordnung
- 4: Schaltschiene
- 6: Gehäuse
- 8: Lager
- 10: Lagerhülse
- 12: Sensor
- 15: Längsachse
- 16: axiales Ende
- 18: Radial-Linear-Wälzlager
- 19: Wälzkörper
- 20: Mantel
- 22: Gehäuseabschnitt
- 26: Boden
- 28: Stirnfläche
- 30: Positionsgeber
- 40: Hallsensor
- 42: Signalnehmer
- 44: Signalausgang
- 50: kapazitiver Näherungssensor

## Patentansprüche

1. Anordnung (2) zur Lagerung einer Schaltschiene, mit einem Gehäuse (6), mit einer Schaltschiene (4) und mit einem von dem Gehäuse (6) aufgenommenen Lager (8) zur längsverschieblichen Lagerung der Schaltschiene (4) in dem Gehäuse (6) wobei zur Bestimmung der Position der Schaltschiene (4) ein Sensor (12,40,50) der Stirnfläche (28) eines axialen Endes (16) der Schaltschiene (4) gegenüberliegend angeordnet ist, **dadurch gekennzeichnet, dass** der sensor (12, 40, 50) in dem Gehäuse (6)) angeordnet ist.

2. Anordnung (2) nach Anspruch 1, **dadurch gekennzeichnet, dass** die Schaltschiene (4) einen mit dem Sensor (12,40,50) in Wirkverbindung stehenden Positionsgeber (30) umfasst.

3. Anordnung (2) nach Anspruch 2, **dadurch gekennzeichnet, dass** der Positionsgeber (30) an der Stirnfläche (28) der Schaltschiene (4) angeordnet ist.

4. Anordnung (2) nach einem der Ansprüche 2 oder 3, **dadurch gekennzeichnet, dass** der Positionsgeber (30) aus einem magnetischen Material gefertigt ist.

5. Anordnung (2) nach einem der vorhergehenden Ansprüche, **dadurch gekennzeichnet, dass** der Sensor (12,40,50) ein Hallsensor (40) ist.

6. Anordnung (2) nach einem der vorhergehenden Ansprüche, **dadurch gekennzeichnet, dass** das Lager (8) in einer Lagerhülse (10) angeordnet ist und das axiale Ende (16) der Schaltschiene (4) lagert.

7. Anordnung (2) nach Anspruch 6, **dadurch gekennzeichnet, dass** der Sensor (12,40,50) einem Boden (26) der Lagerhülse (10) zugeordnet ist.

8. Anordnung (2) nach einem der Ansprüche 6 oder 7, **dadurch gekennzeichnet, dass** das Lager (8) in der Lagerhülse (10) als ein Wälzlager (18) gegeben ist.

9. Anordnung (2) nach Anspruch 8, **dadurch gekennzeichnet, dass** das Wälzlager als ein Radial-Linear-Wälzlager (18) gegeben ist.

10. Anordnung (2) nach einem der Ansprüche 6 bis 9, **dadurch gekennzeichnet, dass** die Lagerhülse (10) aus einem abriebfesten Material gefertigt ist.

11. Anordnung (2) nach Anspruch 10, **dadurch gekennzeichnet, dass** die Lagerhülse (10) aus einem Stahl gefertigt ist.

## Claims

1. Arrangement (2) for mounting a shift rail, having a housing (6), having a shift rail (4) and having a bearing (8) which is accommodated by the housing (6) for mounting the shift rail (4) in the housing (6) in a longitudinally displaceable manner, with a sensor (12, 40, 50) being arranged opposite the end face (28) of an axial end (16) of the shift rail (4) for the purpose of determining the position of the shift rail (4), **characterized in that** the sensor (12, 40, 50) is arranged in the housing (6).

2. Arrangement (2) according to Claim. 1, **characterized in that** the shift rail (4) comprises a position transmitter (30) which is operatively connected to the sensor (12, 40, 50).

3. Arrangement (2) according to Claim 2, **characterized in that** the position transmitter (30) is arranged on the end face (28) of the shift rail (4).

4. Arrangement (2) according to either of Claims 2 and 3, **characterized in that** the position transmitter (30) is produced from a magnetic material.

5. Arrangement (2) according to one of the preceding claims, **characterized in that** the sensor (12, 40, 50) is a Hall sensor (40).

6. Arrangement (2) according to one of the preceding claims, **characterized in that** the bearing (8) is arranged in a bearing sleeve (10) and bears the axial end (16) of the shift rail (4).

7. Arrangement (2) according to Claim 6, **characterized in that** the sensor (12, 40, 50) is associated with a base (26) of the bearing sleeve (10).

8. Arrangement (2) according to either of Claims 6 and 7, **characterized in that** the bearing (8) in the bearing sleeve (10) is provided in the form of a rolling bearing (18).

9. Arrangement (2) according to Claim 8, **characterized in that** the rolling bearing is provided in the form of a radial/linear rolling bearing (18).

10. Arrangement (2) according to one of Claims 6 to 9, **characterized in that** the bearing sleeve (10) is produced from a wear-resistant material.

11. Arrangement (2) according to Claim 10, **characterized in that** the bearing sleeve (10) is produced from a steel.

## Revendications

1. Agencement (2) de support d'une tige de commande, comprenant un boîtier (6), une tige de commande (4) et un palier (8) reçu par le boîtier (6) pour le support déplaçable longitudinalement de la tige de commande (4) dans le boîtier (6), un capteur (12, 40, 50) étant disposé en regard de la surface frontale (28) d'une extrémité axiale (16) de la tige de commande (4), **caractérisé en ce que** le capteur (12, 40, 50) est disposé dans le boîtier (6).

2. Agencement (2) selon la revendication 1, **caractérisé en ce que** la tige de commande (4) comprend un détecteur de position (30) en liaison fonctionnelle avec le capteur (12, 40, 50).

3. Agencement (2) selon la revendication 2, **caractérisé en ce que** le détecteur de position (30) est disposé sur la surface frontale (28) de la tige de commande (4).

4. Agencement (2) selon l'une quelconque des revendications 2 ou 3, **caractérisé en ce que** le détecteur de position (30) est fabriqué en un matériau magnétique.

5. Agencement (2) selon l'une quelconque des revendications précédentes, **caractérisé en ce que** le capteur (12, 40, 50) est un capteur de Hall (40).

6. Agencement (2) selon l'une quelconque des revendications précédentes, **caractérisé en ce que** le palier (8) est disposé dans une douille de palier (10) et supporte l'extrémité axiale (16) de la tige de commande (4).

7. Agencement (2) selon la revendication 6, **caractérisé en ce que** le capteur (12, 40, 50) est associé à un fond (26) de la douille de palier (10).

8. Agencement (2) selon l'une quelconque des revendications 6 ou 7, **caractérisé en ce que** le palier (8) dans la douille de palier (10) est réalisé sous la forme d'un palier à roulement (18).

9. Agencement (2) selon la revendication 8, **caractérisé en ce que** le palier à roulement est réalisé sous la forme d'un palier à roulement radial-linéaire (18).

10. Agencement (2) selon l'une quelconque des revendications 6 à 9, **caractérisé en ce que** la douille de palier (10) est fabriquée en un matériau résistant à l'usure.

11. Agencement (2) selon la revendication 10, **caractérisé en ce que** la douille de palier (10) est fabriquée en acier.
